# EUROPEAN PATENT APPLICATION

(11) **EP 4 726 172 A1**
(43) Date of publication of application: **15.04.2026**
(21) Application number: 25208090.8
(22) Date of filing: 10.10.2025
(51) Int. Cl.: F01D 5/00

(54) **REPAIRING SEAL LANDS FOR TURBINE ENGINE COMPONENT**

(30) Priority: 11.10.2024 US 202418913084
(71) Applicant: RTX Corporation, Farmington, CT 06032 (US)
(72) Inventor: KIRKLAND, Shane R., South Portland, 04106 (US); LONG, JR., Merrell W., North Waterboro, 04061 (US)
(74) Representative: Dehns

(57) **Abstract**

A method is provided for repairing a turbine engine component (20). This method includes: machining away a worn land surface of an annular seal land (46A: 46B) to provide the annular seal land (46A; 46B) with a machined base surface (66A; 66B), the turbine engine component (20) including the annular seal land (46A; 46B), the annular seal land (46A; 46B) extending axially along an axis (32) to the machined base surface (66A; 66B), and the machined base surface (66A; 66B) extending circumferentially around the axis (32); brazing a repair ring (60A; 60B) to the machined base surface (66A; 66B) to provide a seal land preform; and machining the repair ring (60A; 60B) of the seal land preform to provide the turbine engine component (20) with a repaired seal land (46A; 46B) having a repaired land surface (78A; 78B), the repaired seal land (46A; 46B) extending axially along the axis (32) to the repaired land surface (78A; 78B), and the repaired land surface (78A; 78B) extending circumferentially around the axis (32).

## Description

### BACKGROUND OF THE DISCLOSURE

### 1. Technical Field

This disclosure relates generally to a turbine engine and, more particularly, to repairing seal land(s).

### 2. Background Information

Various methods for repairing components of a gas turbine engine are known in the art. While these known repair methods have various benefits, there is still room in the art for improvement.

### SUMMARY OF THE DISCLOSURE

According to an aspect of the present disclosure, a method is provided for repairing a turbine engine component. This method includes: machining away a worn land surface of an annular seal land to provide the annular seal land with a machined base surface, the turbine engine component including the annular seal land, the annular seal land extending axially along an axis to the machined base surface, and the machined base surface extending circumferentially around the axis; brazing a repair ring to the machined base surface to provide a seal land preform; and machining the repair ring of the seal land preform to provide the turbine engine component with a repaired seal land having a repaired land surface, the repaired seal land extending axially along the axis to the repaired land surface, and the repaired land surface extending circumferentially around the axis.

According to another aspect of the present disclosure, which the Applicant expressly reserves the right to claim independently, another method is provided for repairing a turbine engine component. This method includes: grinding away a worn land surface of an annular seal land to provide the annular seal land with a machined base surface, the turbine engine component including the annular seal land, the annular seal land extending axially along an axis to the machined base surface, and the machined base surface extending circumferentially around the axis; brazing a repair ring to the machined base surface to provide a seal land preform, the repair ring having an annular body which extends circumferentially uninterrupted around the axis; and machining the repair ring of the seal land preform to provide the turbine engine component with a repaired seal land having a repaired land surface, the repaired seal land extending axially along the axis to the repaired land surface, and the repaired land surface extending circumferentially around the axis.

According to still another aspect of the present disclosure, which the Applicant expressly reserves the right to claim independently, another method is provided for repairing a turbine engine. This method includes: machining away a worn land surface of a seal land to provide the seal land with a machined base surface, the turbine engine including a component with the seal land, and the machined base surface extending circumferentially about an axis; brazing a repair body to the machined base surface to provide a seal land preform; machining the repair body of the seal land preform to provide the component with a repaired seal land having a repaired land surface, and the repaired land surface extending circumferentially about the axis; and assembling the component with the repaired land surface into the turbine engine. A W-seal engages the repaired land surface.

The repair body may be configured as or otherwise include a repair ring. The repaired land surface may be annular and perpendicular to the axis.

The repair ring may be configured as or otherwise include a single annular monolithic body extending circumferentially around the axis.

A plurality of arcuate bodies may be arranged circumferentially end-to-end around the axis to form the repair ring.

The arcuate bodies may be brazed to the machined base surface during a common braze operation.

The arcuate bodies may be machined during a common machining operation.

The annular seal land and the repair ring may each be configured from or otherwise include a common material.

The annular seal land may be configured from or otherwise include a first material. The repair ring may be configured from or otherwise include a second material that is different than the first material.

The repair ring may be brazed to the machined base surface using a braze foil.

The repair ring may be brazed to the machined base surface using a braze paste.

The repair ring may be brazed to the machined base surface using braze material. The braze material may be applied onto the repair ring prior to the brazing of the repair ring to the machined base surface.

The braze material may be plated onto the repair ring prior to the brazing of the repair ring to the machined base surface.

The method may also include tack welding the repair ring to the annular seal land prior to the brazing of the repair ring to the machined base surface.

The worn land surface may be machined away by grinding and/or turning away the worn land surface.

The annular seal land may not be grit blasted during the method for repairing the turbine engine component.

The method may also include: machining away a second worn land surface of a second annular seal land to provide the second annular seal land with a second machined base surface, the turbine engine component comprising the second annular seal land, the second annular seal land extending axially along the axis to the second machined base surface, and the second machined base surface extending circumferentially around the axis; brazing a second repair ring to the second machined base surface to provide a second seal land preform; and machining the second repair ring of the second seal land preform to provide the turbine engine component with a second repaired seal land having a second repaired land surface, the second repaired seal land extending axially along the axis to the second repaired land surface, and the second repaired land surface extending circumferentially around the axis.

The repaired land surface and the second repaired land surface may face axially away from one another.

The turbine engine component may include an inner wall structure, an outer wall structure and a plurality of vanes. The inner wall structure may extend axially along and circumferentially around the axis. The outer wall structure may extend axially along and circumferentially around the axis. The outer wall structure may be radially outboard of the inner wall structure. The outer wall structure may include the repaired seal land. The vanes may be arranged circumferentially around the axis. Each of the vanes may extend radially between and connected to the inner wall structure and the outer wall structure.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side sectional illustration of a repaired stator vane structure.
FIG. 2 is an end view illustration of a repair ring with a single annular monolithic body.
FIG. 3 is an end view illustration of the repair ring with a segmented arrangement.
FIG. 4 is a schematic end view illustration of the repaired stator vane structure.
FIG. 5 is a flow diagram of a method for repairing a turbine engine component.
FIGS. 6A-C are partial side sectional illustrations depicting exemplary steps in the repair method of FIG. 5.
FIG. 7 is a partial side sectional illustration of the repaired stator vane structure installed within a turbine engine.

### DETAILED DESCRIPTION

The present disclosure includes methods for repairing a component of a gas turbine engine. This turbine engine may be configured as, or otherwise included as part of, a propulsion system for an aircraft. The turbine engine, for example, may be a turbofan engine, a turbojet engine, a turboprop engine or a turboshaft engine. The turbine engine may also or alternatively be configured as, or otherwise included as part of, an electrical power system for the aircraft. The turbine engine, for example, may be an auxiliary power unit (APU) engine. The aircraft may be an airplane, a drone (e.g., an unmanned aerial vehicle (UAV)), a rotorcraft (e.g., a helicopter), or any other manned or unmanned aerial vehicle or system. The repair methods of the present disclosure, however, are not limited to aircraft application. The turbine engine, for example, may alternatively be a ground-based turbine engine; e.g., an industrial turbine engine.

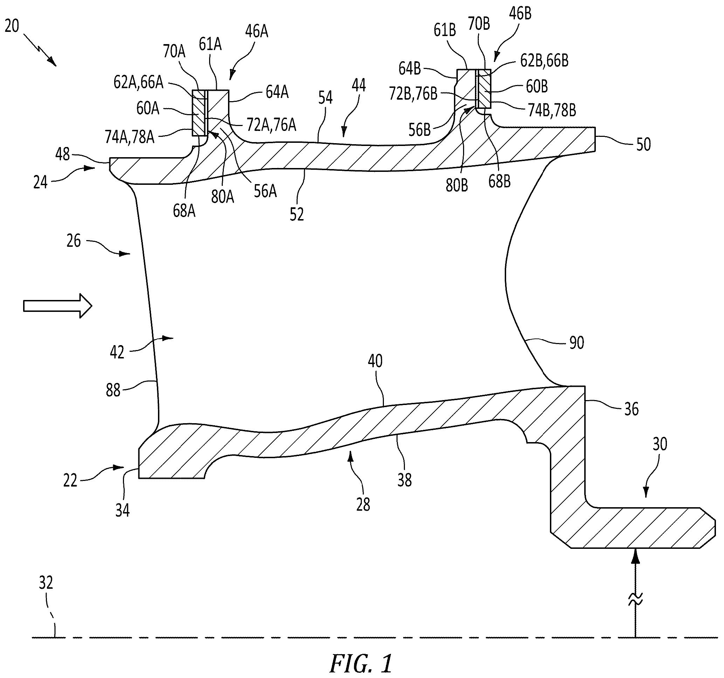

The turbine engine component may be configured as any component within the turbine engine with one or more seal lands. Examples of the turbine engine component include, but are not limited to, a stator vane structure, a shroud, a flowpath wall, a blade outer air seal (BOAS), a support frame, or the like. However, for ease of description, the turbine engine component may be described below as the stator vane structure. An exemplary embodiment of a repaired stator vane structure 20 (e.g., the stator vane structure following performance of a repair thereon) is shown in FIG. 1.

The repaired stator vane structure 20 may be configured as an inlet guide vane structure, an exit guide vane structure, a nozzle structure, etc. The repaired stator vane structure 20 may be included in a compressor section of the turbine engine, a turbine section of the turbine engine, an exhaust section of the turbine engine, or otherwise. The repaired stator vane structure 20 of FIG. 1 includes a radial inner wall structure 22, a radial outer wall structure 24 and a plurality of stator vanes 26.

The inner wall structure 22 of FIG. 1 includes an inner platform 28 and an inner mount 30. The inner platform 28 extends axially along an axis 32 from an upstream end 34 of the inner platform 28 to a downstream end 36 of the inner platform 28. Briefly, the axis 32 may be a centerline axis of the repaired stator vane structure 20 and/or, more generally, a centerline axis of the turbine engine in which the repaired stator vane structure 20 is included. The axis 32 may also or alternatively be a rotational axis for one or more rotating members of the turbine engine in which the repaired stator vane structure 20 is included. The inner platform 28 extends radially from a radial inner side 38 of the inner platform 28 to a radial outer side 40 of the inner platform 28. The inner platform 28 extends circumferentially about (e.g., completely around) the axis 32, providing the inner platform 28 of FIG. 1 with a full-hoop (e.g., tubular) geometry. With this arrangement, the inner platform 28 and its inner platform outer side 40 form a radial inner peripheral boundary of a longitudinal section of an internal flowpath 42 of the turbine engine. Briefly, this engine flowpath 42 extends longitudinally through the repaired stator vane structure 20.

The inner mount 30 is connected to (e.g., formed integral with or otherwise attached to) the inner platform 28. The inner mount 30 of FIG. 1 is disposed radially inboard of the inner platform 28, for example at (e.g., on, adjacent or proximate) the inner platform downstream end 36. The repaired stator vane structure 20 of the present disclosure, of course, is not limited to such an exemplary inner mount arrangement.

The outer wall structure 24 of FIG. 1 includes an outer platform 44 and one or more repaired seal lands 46A and 46B (generally referred to as "46"). The outer platform 44 extends axially along the axis 32 from an upstream end 48 of the outer platform 44 to a downstream end 50 of the outer platform 44. The outer platform 44 extends radially from a radial inner side 52 of the outer platform 44 to a radial outer side 54 of the outer platform 44. The outer platform 44 extends circumferentially about (e.g., completely around) the axis 32, providing the outer platform 44 of FIG. 1 with a full-hoop (e.g., tubular) geometry. Here, the outer platform 44 is spaced radially outboard from the inner platform 28. The outer platform 44 also longitudinally overlaps and circumscribes the inner platform 28. With this arrangement, the outer platform 44 and its outer platform inner side 52 form a radial outer peripheral boundary of the longitudinal section of the engine flowpath 42.

The repaired seal lands 46 of FIG. 1 are disposed radially outboard of the outer platform 44. The upstream repaired seal land 46A is disposed towards the outer platform upstream end 48. The downstream repaired seal land 46B is disposed towards the outer platform downstream end 50. Each of these repaired seal lands 46A, 46B of FIG. 1 includes a seal land flange 56A, 56B (generally referred to as "56") and a machined repair ring 60A, 60B (generally referred to as "60").

The seal land flange 56 is connected to (e.g., formed integral with or otherwise attached to) the outer platform 44. This seal land flange 56A, 56B projects radially outward from the outer platform 44 to a radial outer distal end 61A, 61B (generally referred to as "61") of the respective repaired seal land 46A, 46B. The seal land flange 56A, 56B extends axially along the axis 32 from an interior side 62A, 62B (generally referred to as "62") of the respective seal land flange 56A, 56B to an exterior side 64A, 64B (generally referred to as "64") of the seal land flange 56A, 56B. At the flange interior side 62A, 62B, the seal land flange 56A, 56B includes a machined base surface 66A, 66B (generally referred to as "66"). The machined base surface 66 of FIG. 1 is a flat annular surface which is arranged perpendicular to the axis 32. The seal land flange 56 and its machined base surface 66 extend circumferentially about (e.g., completely around) the axis 32, providing the seal land flange 56 of FIG. 1 and its machined base surface 66 with full-hoop (e.g., annular) geometries. Moreover, the seal land flange 56 of FIG. 1 and its machined base surface 66 may be circumferentially uninterrupted. In other embodiments, however, the seal land flange 56 may be formed from multiple segments such that the base surface 66 is circumferentially interrupted by seams.

The machined repair ring 60A, 60B extends radially from a radial inner end 68A, 68B of the respective machined repair ring 60A, 60B to a radial outer end 70A, 70B of the respective machined repair ring 60A, 60B. Here, the ring outer end 70 is disposed at and may partially form the outer distal end 61 of the respective repaired seal land 46. The ring inner end 68, by contrast, may (or may not) be slightly radially spaced out from the outer platform 44 by a radial gap; e.g., an annular air gap. The machined repair ring 60A, 60B extends axially along the axis 32 from an interior side 72A, 72B (generally referred to as "72") of the respective machined repair ring 60A, 60B to an exterior side 74A, 74B (generally referred to as "74") of the respective machined repair ring 60A, 60B. At the ring interior side 72A, 72B, the machined repair ring 60A, 60B includes a mating surface 76A, 76B (generally referred to as "76"). At the ring exterior side 74A, 74B, the machined repair ring 60A, 60B includes a machined seal land surface 78A, 78B (generally referred to as "78") which forms a repaired land surface of the respective repaired seal land 46A, 46B. Each of the ring surfaces (e.g., 76 and 78) of FIG. 1 is a flat annular surface which is arranged perpendicular to the axis 32. The machined repair ring 60 and each of its ring surfaces (e.g., 76 and 78) extends circumferentially about (e.g., completely around) the axis 32, providing the machined repair ring 60 of FIG. 1 and its ring surfaces (e.g., 76 and 78) with full-hoop (e.g., annular) geometries.

The machined repair ring 60 is brazed to the respective seal land flange 56 using braze material 80A, 80B (generally referred to as "80"). More particularly, the ring mating surface 76 is aligned with and disposed axially next to the respective machined base surface 66 with the braze material 80 between and bonding the ring mating surface 76 and the machined base surface 66 together. Here, the machined repair ring 60 and its ring mating surface 76 may completely (or partially) radially and circumferentially overlap the respective machined base surface 66. With this arrangement, each repaired seal land 46 extends axially along the axis 32 from the respective flange exterior side 64 to the respective machined seal land surface 78 / the respective repaired land surface. In FIG. 1, the machined seal land surface 78 / the repaired land surface of the upstream repaired seal land 46A faces axially upstream and away from the downstream repaired seal land 46B. Similarly, the machined seal land surface 78 / the repaired land surface of the downstream repaired seal land 46B faces axially downstream and away from the upstream repaired seal land 46A. The present disclosure, however, is not limited to such an exemplary arrangement between the repaired seal lands 46A and 46B.

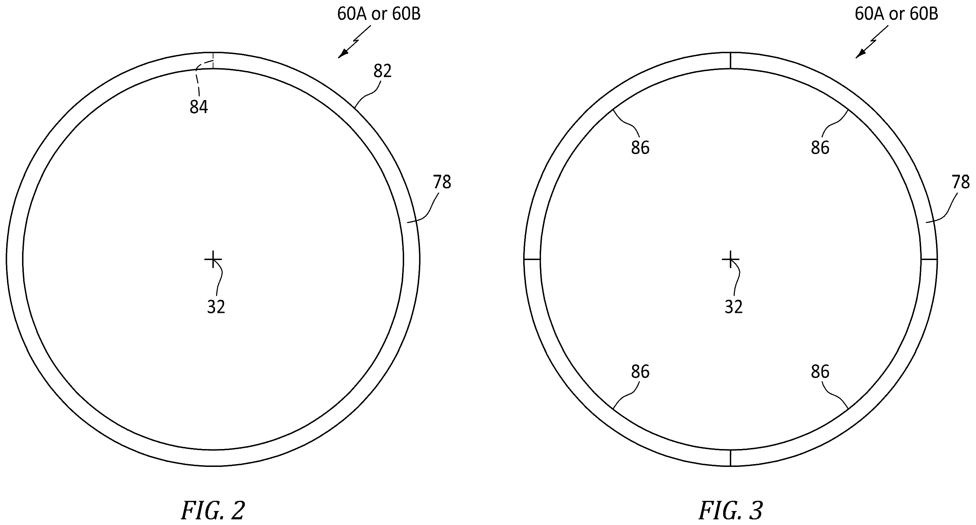

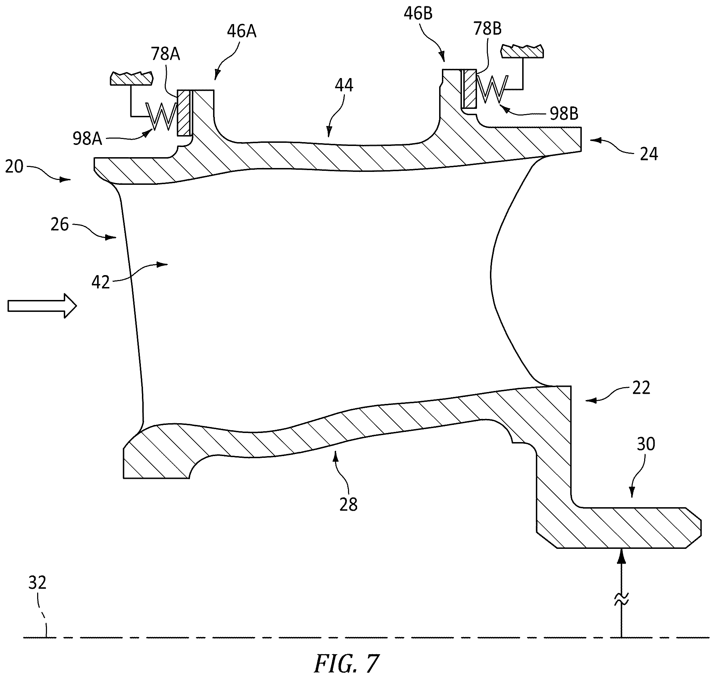

In some embodiments, referring to FIG. 2, one or both of the machined repair rings 60 may each be configured as a single annular monolithic body 82. The term "monolithic" may describe an object which is cast, machined, additively manufactured and/or otherwise formed as a single, unitary body. By contrast, a non-monolithic body may be formed from a plurality of discretely formed objects which are connected together following the formation of those objects. The machined repair ring 60 of FIG. 2 is configured as a circumferentially uninterrupted ring. The machined seal land surface 78 / the repaired land surface of the respective machined repair ring 60 is also circumferentially uninterrupted which may improve sealing contact with a seal element; e.g., see FIG. 7. However, in other embodiments, it is contemplated this machined repair ring 60 may alternatively be configured as a piston-type ring with a slight relief slot (see dashed line 84) to facilitate arrangement with the respective seal land flange 56 (see FIG. 1) during the repair.

In some embodiments, referring to FIG. 3, one or both of the machined repair rings 60A, 60B may each include a plurality of arcuate bodies 86; e.g., arcuate ring segments. Each of these arcuate bodies 86 extends circumferentially about the axis 32 between opposing circumferential sides of the respective arcuate body 86. The arcuate bodies 86 are arranged circumferentially end-to-end about the axis 32 in an array to form the respective machined repair ring 60. With this arrangement, each arcuate body 86 forms a full circumferential segment of the respective machined repair ring 60. The segmented arrangement of FIG. 3 may facilitate arrangement of the respective machined repair ring 60 with the respective seal land flange 56 (see FIG. 1) during the repair. The segmented arrangement of FIG. 3 may also reduce internal stress within the respective repaired seal land 46 where, for example, the respective machined repair ring 60 and its arcuate bodies 86 are formed from a different material than the respective seal land flange 56 (see FIG. 1) with (e.g., slightly) different thermal expansion coefficients.

In some embodiments, referring to FIG. 1, one or both of the machined repair rings 60 may each be formed from a different material than the material of the respective seal land flange 56. The repair ring material may thereby be selected to provide improved repair ring manufacturability, improved repair ring wear characteristics and/or improved repair ring tribology. Alternatively, one or both of the machined repair rings 60 may each be formed from a common (e.g., the same, identical) material as the respective seal land flange 56 and, more generally, the outer wall structure 24.

Each machined repair ring 60 has an axial thickness. Each seal land flange 56A, 56B has an axial thickness. In some embodiments, the repair ring thickness may be equal to or greater than the flange thickness. In other embodiments, the flange thickness may be greater than the repair ring thickness. Note, the repair ring thickness may be adjusted based on how much worn material is removed from an original seal land flange prior to the repair.

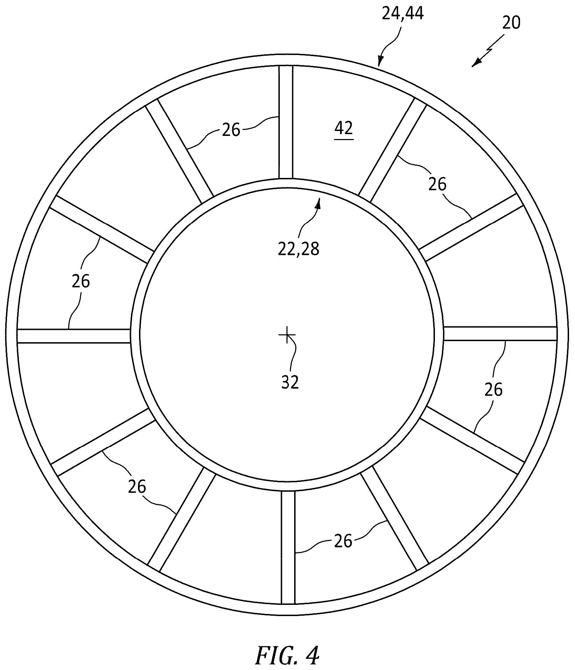

Referring to FIG. 4, the stator vanes 26 are arranged and may be equispaced circumferentially about the axis 32 in an array. Referring to FIG. 1, each of the stator vanes 26 is connected to (e.g., formed integral with or otherwise attached to) (a) the inner wall structure 22 and its inner flowpath and (b) the outer wall structure 24 and its outer platform 44. Each of the stator vanes 26 projects radially across the engine flowpath 42 from the inner platform 28 at its inner platform outer side 40 to the outer platform 44 at its outer platform inner side 52. Each of the stator vanes 26 extends longitudinally within the engine flowpath 42 from a leading edge 88 of the respective stator vane 26 to a trailing edge 90 of the respective stator vane 26.

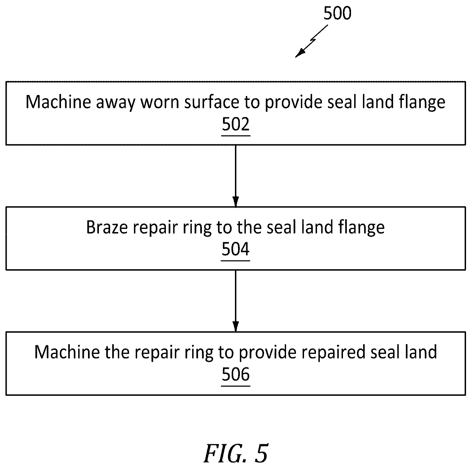

FIG. 5 is a flow diagram of a method 500 for repairing a turbine engine component. For ease of description, this turbine engine component is described below as the repaired stator vane structure 20 of FIG. 1. Moreover, for ease of description, the repair method 500 is described below with reference to providing a single one of the repaired seal lands 46, which may be the upstream repaired seal land 46A or the downstream repaired seal land 46B. However, this repair method 500 may also be performed to provide both of the repaired seal lands 46A and 46B. In such embodiments, the repaired seal lands 46A and 46B may be repaired simultaneously or sequentially in any order. The repair method 500 of the present disclosure, of course, is not limited to repairing such an exemplary turbine engine component.

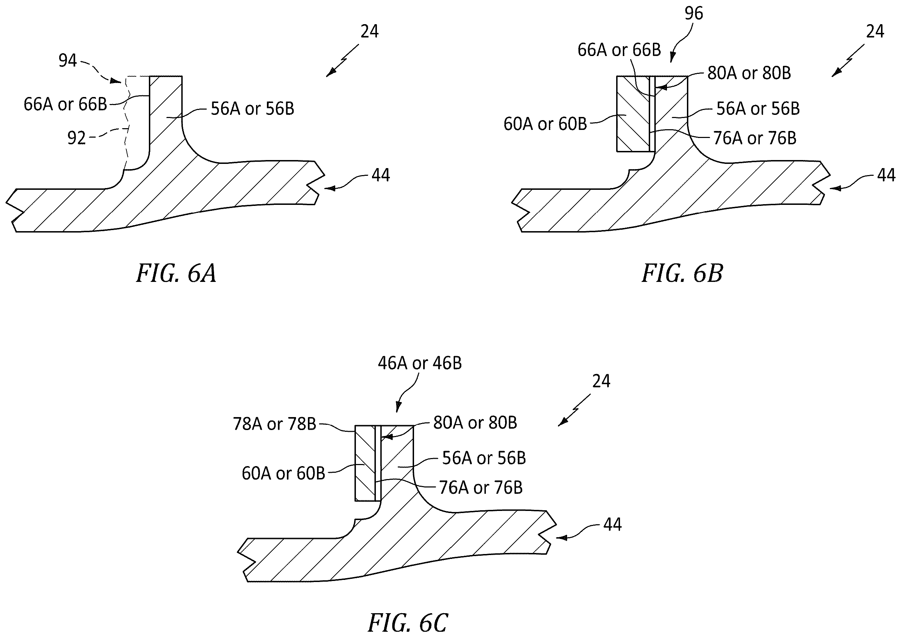

In step 502, referring to FIG. 6A, a worn land surface 92 is machined away from a respective worn seal land flange 94 to provide the seal land flange 56. The worn land surface 92, for example, may be removed using a grinding operation and/or other machining operation such as a turning operation. Notably, such a grinding and/or machining operation may remove the worn land surface 92 without damaging the seal land flange 56. By contrast, a grit blasting operation may damage the seal land flange 56 particularly where that seal land flange 56 is relatively thin. The machining step 502 may thereby be performed without grit blasting.

In step 504, referring to FIG. 6B, the repair ring 60 is brazed to the seal land flange 56 to provide a seal land preform 96. The repair ring 60, for example, may be arranged with the seal land flange 56 with the braze material 80 axially between the repair ring 60 and the seal land flange 56. Prior to the brazing, the repair ring 60 may be tack welded to the seal land flange 56 to, for example, secure the members 60 and 56 together for the brazing process. The braze material 80 may be provided between the repair ring 60 and the seal land flange 56 as a braze foil and/or a braze paste. In some embodiments, the braze material 80 may be applied onto the repair ring 60 and/or the seal land flange 56 prior to arranging the repair ring 60 and the seal land flange 56 together. The braze material 80, for example, may be adhered to the respective member 56, 60 or plated onto the respective member 56, 60. Where the repair ring 60 has a segmented arrangement as shown in FIG. 3, the arcuate bodies 86 may be simultaneously brazed to the seal land flange 56 during a common (the same) brazing operation. Alternatively, sets of one or more of the arcuate bodies 86 may be incrementally brazed to the seal land flange 56 one after another.

In step 506, referring to FIG. 6C, the seal land preform 96 is machined to provide the repaired seal land 46. The repair ring 60, for example, may be machined so as to provide the repaired seal land 46 with an axial thickness according to a design / repair specification for the stator vane structure. This machining may be performed using a grinding operation and/or other machining operation such as a turning operation. Following this machining step 506, the repaired seal land 46 is provided with its machined seal land surface 78 / the repaired land surface. Where the repair ring 60 has a segmented arrangement as shown in FIG. 3, the arcuate bodies 86 may be simultaneously machined during a common (the same) machining operation.

Referring to FIG. 7, following the provision of the repaired stator vane structure 20, the repaired stator vane structure 20 may be installed into the turbine engine. When assembled within the turbine engine, each repaired seal land 46 may be axially sealingly engaged by a respective annular seal element 98A, 98B (generally referred to as "98"); e.g., a seal ring. Each seal element 98, for example, may be axially abutted against, axially contact and/or otherwise axially engage the respective machined seal land surface 78 / the respective repaired land surface. Each seal element 98 of FIG. 7 is configured as a W-seal. In other embodiments, however, it is contemplated one or both seal elements 98 may alternatively be configured as a C-seal, a rope seal or another type of seal ring.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method for repairing a turbine engine component (20), comprising:
machining away a worn land surface (92) of an annular seal land (46A; 46B) to provide the annular seal land (46A; 46B) with a machined base surface (66A; 66B), the turbine engine component (22) comprising the annular seal land (46A; 46B), the annular seal land (46A; 46B) extending axially along an axis (32) to the machined base surface (66A; 66B), and the machined base surface (66A; 66B) extending circumferentially around the axis (32);
brazing a repair ring (60A; 60B) to the machined base surface (66A; 66B) to provide a seal land preform (96); and
machining the repair ring (60A; 60B) of the seal land preform (96) to provide the turbine engine component (20) with a repaired seal land (46A; 46B) having a repaired land surface (78A; 78B), the repaired seal land (46A; 46B) extending axially along the axis (32) to the repaired land surface (78A; 78B), and the repaired land surface (78A; 78B) extending circumferentially around the axis (32).

2. The method of claim 1, wherein the repair ring (60A; 60B) comprises a single annular monolithic body (82) extending circumferentially around the axis (32).

3. The method of claim 1, wherein a plurality of arcuate bodies (86) are arranged circumferentially end-to-end around the axis (32) to form the repair ring (60A; 60B).

4. The method of claim 3, wherein the plurality of arcuate bodies (86) are brazed to the machined base surface (66A; 66B) during a common braze operation.

5. The method of claim 3 or 4, wherein the plurality of arcuate bodies (86) are machined during a common machining operation.

6. The method of any preceding claim, wherein the annular seal land (46A; 46B) and the repair ring (60A; 60B) comprises a common material.

7. The method of any of claims 1 to 5, wherein
the annular seal land (46A; 46B) comprises a first material; and
the repair ring (60A; 60B) comprises a second material that is different than the first material.

8. The method of any preceding claim, wherein the repair ring (60A; 60B) is brazed to the machined base surface (66A; 66B) using a braze foil (80A; 80B).

9. The method of any preceding claim, wherein the repair ring (60A; 60B) is brazed to the machined base surface (66A; 66B) using a braze paste (80A; 80B).

10. The method of any preceding claim, wherein the repair ring (60A; 60B) is brazed to the machined base surface (66A; 66B) using braze material (80A; 80B), and the braze material (80A; 80B) is applied onto the repair ring (60A; 60B) prior to the brazing of the repair ring (60A; 60B) to the machined base surface (66A; 66B), optionally wherein the braze material (80A; 80B) is plated onto the repair ring (60A; 60B) prior to the brazing of the repair ring (60A; 60B) to the machined base surface (66A; 66B).

11. The method of any preceding claim, further comprising tack welding the repair ring (60A; 60B) to the annular seal land (46A; 46B) prior to the brazing of the repair ring (60A; 60B) to the machined base surface (66A; 66B).

12. The method of any preceding claim, wherein the worn land surface (92) is machined away by grinding and/or turning away the worn land surface (92).

13. The method of any preceding claim, wherein the annular seal land (46A: 46B) is not grit blasted during the method for repairing the turbine engine component (20).

14. The method of any preceding claim, further comprising:
machining away a second worn land surface (92) of a second annular seal land (46B; 46A) to provide the second annular seal land (46B; 46A) with a second machined base surface (66B; 66A), the turbine engine component (20) comprising the second annular seal land (46B; 46A), the second annular seal land (46B: 46A) extending axially along the axis (32) to the second machined base surface (66B; 66A), and the second machined base surface (66B; 66A) extending circumferentially around the axis (32);
brazing a second repair ring (60B; 60A) to the second machined base surface (66B; 66A) to provide a second seal land preform (96); and
machining the second repair ring (60B; 60A) of the second seal land preform (96) to provide the turbine engine component (20) with a second repaired seal land (46B; 46A) having a second repaired land surface (78B; 78A), the second repaired seal land (46B; 46A) extending axially along the axis (32) to the second repaired land surface (78B; 78A), and the second repaired land surface (78B; 78A) extending circumferentially around the axis (32), optionally wherein the repaired land surface (78A; 78B) and the second repaired land surface (78B; 78A) face axially away from one another.

15. The method of any preceding claim, wherein the turbine engine component (20) includes
an inner wall structure (22) extending axially along and circumferentially around the axis (32);
an outer wall structure (24) extending axially along and circumferentially around the axis (32), the outer wall structure (24) radially outboard of the inner wall structure (22), and the outer wall structure (24) comprising the repaired seal land (46A; 46B); and
a plurality of vanes (26) arranged circumferentially around the axis (32), each of the plurality of vanes (26) extending radially between and connected to the inner wall structure (22) and the outer wall structure (24).
